# EUROPÄISCHE PATENTSCHRIFT

(11) **EP 2 002 141 B1**
(45) Veröffentlichungstag und Bekanntmachung des Hinweises auf die Patenterteilung: **03.03.2010**
(21) Anmeldenummer: 07723620.6
(22) Anmeldetag: 27.03.2007
(51) Int. Cl.: F16D 55/46, F16D 65/21

(54) **SELBSTVERSTÄRKENDE SCHEIBENBREMSE UND VERFAHREN ZU DEREN ANSTEUERUNG**
SELF-ENERGISING DISK BRAKE AND METHOD FOR THE CONTROL THEREOF
FREIN À DISQUE À AUTO-AMPLIFICATION ET PROCÉDÉ DE COMMANDE DE CELUI-CI

(30) Priorität: 28.03.2006 DE 102006014274; 29.06.2006 DE 102006029943
(43) Veröffentlichungstag der Anmeldung: 17.12.2008
(73) Patentinhaber: KNORR-BREMSE Systeme für Nutzfahrzeuge GmbH, 80809 München (DE)
(72) Erfinder: SEIDENSCHWANG, Matthias, 80637 München (DE); TRIMPE, Robert, 82234 Wessling (DE); BAUMGARTNER, Johann, 85368 Moosburg (DE); GEISSLER, Steffen, 85399 Goldach (DE)
(74) Vertreter: Mattusch, Gundula
(86) Internationale Anmeldenummer: PCT/EP2007/002674
(87) Internationale Veröffentlichungsnummer: WO 2007/112882

(56) Entgegenhaltungen:
- WO-A-03/071150
- WO-A-03/091591
- WO-A-2006/042621
- US-A1- 2004 154 881

## Beschreibung

Die Erfindung betrifft eine selbstverstärkende Scheibenbremse nach dem Oberbegriff des Anspruchs 1 und ein Verfahren zu deren Ansteuerung.

Es ist bekannt, selbstverstärkenden Scheibenbremsen einen Elektromotor als Aktuator und eine Rechnereinheit zur Steuerung/Regelung zuzuordnen, um dem Hauptproblem dieser Bremsenbauart, der Verstärkung von Reibwertschwankungen, entgegenzuwirken.

Selbstverstärkende Scheibenbremsen, bei welchen die Betätigung des Bremsbelages in Umfangsrichtung erfolgt (siehe z.B. die DE 101 56 348 C1), benötigen dabei zur Steuerung der Bremsbetätigung eine Information über die Drehrichtung des Fahrzeugrades.

Wenn z.B. infolge einer fehlerhaften Ansteuerung der Bremsbelag entgegen der Drehrichtung des Fahrzeugrades und damit auch der Bremsscheibe verschoben wird, wirkt die Reibkraft des Bremsbelages über das Keilsystem "entstärkend" auf die Spannkraft der Bremse, so dass die erzielte Bremswirkung nur einen Bruchteil des bei richtiger Ansteuerung erzielbaren Betrages ausmacht.

Das gleiche Problem ergibt sich auch bei intakter Steuerung, wenn die Bremse bei stehendem Rad betätigt wird. Auch dann muss der Bremsbelag beim Betätigen der Bremse gegen die wirkende Reibkraft an der Bremsscheiben - Reibfläche entlang verschoben werden, wodurch die schon beschriebene Reduzierung der Spannkraft hervorgerufen wird.

In diesem Fall muss erst durch geringes Rollen des Fahrzeuges eine Drehung des Rades ( in der richtigen Richtung ) hervorgerufen werden, damit durch die dabei auftretende Selbstverstärkung die Spannkraft erhöht wird.

Eine ähnliche Problematik ergibt sich, wenn an einer Steigung nach einer Bremsung in Vorwärtsfahrtrichtung - bei erreichtem Stillstand des Fahrzeugs - die Hangabtriebskraft wirksam wird, denn in diesem Fall ist sogar ein geringes Rückwärtsrollen des Fahrzeuges notwendig, damit der in Rückwärtsrichtung wirksame Keil aktiviert werden kann. Um diesen Zustand zu erkennen, ist ein Neigungssensor erforderlich.

Elektromotorisch angetriebene Scheibenbremsen mit Nachstellvorrichtungen sind an sich bekannt. In der DE 103 28 244 A1 wird eine selbstverstärkende Scheibenbremse vorgeschlagen, die über ein Verschleißnachstellsystem verfügt, wobei bei einem der offenbarten Ausführungsbeispiele ein Verteilergetriebe zwischen einem Elektromotor einerseits und einer Zustellspindel und einer Nachstellvorrichtung andererseits angeordnet ist, wobei entweder die Zustellspindel allein oder gemeinsam mit der Nachstellvorrichtung antreibbar ist.

In der eigenen älteren zwischenveröffentlichten DE 10 2005 030 618.7 der Anmelderin wird eine selbstverstärkende Scheibenbremse vorgeschlagen, die demgegenüber über ein weiterentwickeltes Verschleißnachstellsystem verfügt.

Ein Elektromotor wirkt über ein verzweigendes Getriebe - ein Planetengetriebe - entweder über eine erste Zuspanneinrichtung oder eine zweite Zuspanneinrichtung auf einen Bremsbelag bzw. eine Bremsbelageinheit ein. In bevorzugter Ausgestaltung ist das verzweigende Getriebe ein Planetengetriebe, die erste Zuspanneinrichtung eine Kurbel, und die zweite Zuspanneinrichtung, die auch als Nachstelleinrichtung genutzt wird, besteht aus zwei separaten Bremsstempeln und Nachstellspindeln, die jeweils aus einer axial längenveränderlichen Spindel-Mutterkombination gebildet sind.

Der Antriebsmotor wird genügend leistungsstark ausgelegt, um über einen Antrieb der Nachstellspindeln genügend hohe Spannkräfte zu erzeugen wird. Daher ist es möglich, bei dieser Bremsenbauart die Parkbremsfunktion über eine Zuspannung mittels dieser Nachstellspindeln zu realisieren.

Diese Lösung hat sich an sich bewährt. Verbesserungsbedarf besteht aber noch in Hinsicht auf die nach wie vor bestehende Drehrichtungsabhängigkeit.

Bei der genannten Bauart einer selbstverstärkenden Bremse mit Nachstellspindeln kann die Richtung der Gewindesteigung der Nachstellspindeln nur einer Drehrichtung des Antriebes zugeordnet werden.

So ergibt sich z.B. bei einem Bremsvorgang in Vorwärtsfahrtrichtung nach einem Stillstand des Rades durch die hemmende Wirkung der stillstehenden Bremsscheibe bei noch weiter ansteigender Betätigung der Bremse durch den Fahrer ein selbsttätiges Umsteuern des Antriebes von dem Betätigungselement der Betriebsbremse (Kurbel) auf den Spindelantrieb.

Dabei läuft der Elektromotor kontinuierlich in der gleichen Richtung weiter ( siehe Bild 1 ).

Das selbsttätige Umsteuern erfolgt dadurch, dass die Antriebsbewegung im verzweigenden Getriebe immer den Weg des geringeren Widerstandes sucht.

Bei einer Bremsung in Vorwärtsfahrtrichtung ist die Reibungshemmung in den Gewindespindeln sehr groß während der Betriebsbremsantrieb (Kurbel) durch den Selbstverstärkungseffekt entlastet wird.

In diesem Fall ist der Drehwiderstand auf der Spindelseite erheblich höher, so dass die Kurbel aktiviert wird. Bei stillstehendem oder in die entgegengesetzte Richtung drehendem Rad wandelt sich die Selbstverstärkung in einen "Entstärkungs" - Effekt. D.h. die Drehhemmung an der Kurbel wird deutlich höher als am Spindelantrieb, so dass die Antriebsdrehbewegung nunmehr auf die Spindeln geleitet wird.

Beim Lösen der Bremse wird die Kurbel durch die rückstellende Kraft des Keilsystems unterstützt, so dass die Drehhemmung an der Spindel höher ist als an der Kurbel.

Die Kurbel wird nun zurückgedreht, dreht aber über ihre Ausgangsposition hinaus in Richtung einer Rückwärtsbremsung, da der Elektromotor die gleiche Anzahl an Umdrehungen in Löserichtung ausführt, die er beim Zuspannen absolviert hat. Im Ergebnis würde die Bremse also nicht mehr vollständig gelöst.

Um diesen Zustand zu beherrschen, könnten zusätzliche Sensoren zur Erkennung der Position der Kurbel und/oder der Spindeln eingesetzt werden.

Die Kurbel könnte dann bei Erreichen der Ausgangsstellung über eine schaltbare Haltebremse blockiert werden, so dass die weitere Rückstell-Drehbewegung auf die Spindeln geleitet würde.

Tritt der Radstillstand an dieser Bremse bei einer Rückwärtsbremsung auf, werden die Nachstellspindeln als Folge der entgegen gesetzten Motordrehrichtung in Löserichtung gedreht. Die Bremse wird also wirkungslos gemacht.

Um diesen Zustand auszuschließen, muss die Steuerung Kenntnis des Rückwärtsfahrt - Vorganges haben. Die Kurbel muss über die erwähnte Haltebremse blockiert und der Elektromotor in seiner Drehrichtung umgesteuert werden.

Neben der erhöhten Dauer des Bremsvorganges werden zusätzliche Funktionen not-wendig.

Um die Drehrichtungsabhängigkeit zu beherrschen, wird neben der Erkennung der Raddrehrichtung auch die bereits erwähnte Positionserkennung der Kurbel und/oder der Spindelposition notwendig, da die Motorposition nicht mehr eindeutig einer bestimmten Stellung der beiden Abtriebselemente des verzweigenden Getriebes zugeordnet werden kann. Zusätzlich zu erhöhten Kosten wird durch die höhere Komplexität des Systems auch die Störanfälligkeit erhöht.

Ein weiteres Problem ist der Übergang von einem Betriebsbremszustand auf die Parkbremse.

Wird nach einer Betriebsbremsung mit gehaltener Betriebsbremse die Parkbremse eingelegt, was der üblichen Praxis eine Fahrzeugführers entspricht, erfolgt die Spindelzuspannung in einem Zustand, in dem der Rollkörper des Keilsystems eine Position auf der Rampe einnimmt.

Da beim Einlegen der Parkbremse die Kurbel blockiert wird, bleibt die nach der Spindelzuspannung erreichte Spannkraft zunächst erhalten. Nach dem Abstellen des Fahrzeuges wird jedoch die Magnet-Haltebremse der Kurbel automatisch stromlos.

Die Parkbremsspannkraft könnte nun nur erhalten bleiben, wenn die Magnet- Haltebremse stromlos geschlossen bleiben würde.

Dies ist jedoch ausgeschlossen, da das Betriebsbremssystem im stromlosen Zustand selbsttätig lösend ausgeführt werden muss.

Im somit notwendigen Fall der stromlos offenen Magnet-Haltebremse würde die Parkbremsspannkraft durch die selbsttätig zurückdrehende Kurbel reduziert, was zu einer undefinierten und in häufigen Fällen unzureichenden Parkbremswirkung führen würde.

Eine mögliche Lösung könnte in einer aufwendigen bistabilen Kupplung bestehen, welche jedoch auch die Komplexität der Bremse weiter steigern würde.

Es sind auch Fahrzeuge mit selbstverstärkenden Scheibenbremsen bekannt, bei denen die Selbstverstärkung jeweils nur in einer Drehrichtung genutzt wird, z.B. in der Form, dass die Bremsen der Vorderachse in Vorwärtsfahrtrichtung verstärken und die Bremsen der Hinterachse in Rückwärtsfahrtrichtung aktiviert werden, wobei der Selbstverstärkungsmechanismus spannkraftmindemde Wirkung erzeugt. (DE 103 38 449 A1 und DE 103 56 936 A1 ).

Da diese Bremsen über keine separate Nachstellvorrichtung verfügen, sondern die Nachstellbewegung über die Verstärkungsrampe ausführen, kann durch die einsinnige Selbstverstärkung die notwendige Umfangsverschiebung des Bremsbelages noch in vertretbaren Grenzen gehalten werden.

Die nachveröffentlichte WO-A-2006/042621 zeigt die Merkmale des Oberbegriffs des Anspruchs 1 und des Anspruchs 2.

Probleme in Hinsicht auf die Drehrichtungsabhängigkeit ergeben sich auch bei der gattungsgemäßen WO-A-03/071150, bei welcher ein verzweigendes Getriebe zum Antreiben der Zuspannvorrichtung und der Nachstellvorrichtung vorgesehen ist.

Vor dem Hintergrund des genannten Standes der Technik besteht der Bedarf nach einer selbstverstärkenden Scheibenbremse, bei welcher das Problem der Drehrichtungs-- Abhängigkeit, insbesondere beim Übergang einer Betätigung von einem Betriebsbremsaktuator auf einen Feststellbremsaktuator, insbesondere mit einem Spindelantrieb, nicht besteht.

Die Lösung dieses Problems ist die daher die Aufgabe der Erfindung.

Die Erfindung löst diese Aufgabe durch den Gegenstand des Anspruchs 1 sowie durch ein Verfahren zur Ansteuerung dieser Scheibenbremse gemäß Anspruch 15.

Vorteilhafte Ausgestaltungen sind in den Unteransprüchen und den ggf. weiteren nebengeordneten Ansprüchen angegeben.

Die Erfindung realisiert in Hinsicht auf das Verfahren ein solches zum Ansteuern einer selbstverstärkenden Bremse nach einem der vorstehenden Ansprüche, **dadurch gekennzeichnet, dass** bei Bremsungen in Vorwärtsfahrtrichtung zum überwiegenden Teil - d.h. zum Erzeugen von mehr als 50%, vorzugsweise mehr als 80%, insbesondere der ganzen Zuspannkraft - die erste Zuspannvorrichtung und bei Bremsungen in Rückwärtsfahrtrichtung zum überwiegenden Teil die zweite Zuspannvorrichtung zum Zuspannen der Bremse verwendet wird.

Besonders bevorzugt wird bei Bremsungen in Vorwärtsfahrtrichtung die erste Zuspannvorrichtung in Kombination mit der Selbstverstärkungseinrichtung und bei Bremsungen in Rückwärtsfahrtrichtung die zweite Zuspannvorrichtung ohne Selbstverstärkungseinrichtung zum Zuspannen der Bremse verwendet wird.

Die Erfindung baut auf der Idee auf, dass aufgrund der geringeren Anforderungen an den Rückwärtsbremsvorgang hinsichtlich Bremskraft, Fahrgeschwindigkeit, Dynamik des Bremsvorganges und Selbstlöseverhalten nicht nur die Parkbremsungen sondern auch Betriebsbremsungen bei Rückwärtsfahrt durch die Spindelzuspannung ausgeführt werden können, so dass es auf einfache Weise möglich wird, mit der beanspruchten Konstruktion die Selbstverstärkung nur bei Vorwärtsbremsungen zu nutzen.

Durch diese Maßnahme wird nicht nur die Mechanik der Bremse vereinfacht, sondern auch die Steuerung. Zudem können aufwendige und störungsanfällige Sensierungsfunktionen entfallen.

Der Antriebsmotor erhält eindeutige Drehrichtungsvorgaben, so sind Antriebs - und Lösedrehrichtung des Elektromotors sind für Vorwärts - und Rückwärtsfahrt vorzugsweise gleich. Eine wichtige Voraussetzung ist das selbsttätige Umsteuern von Kurbelantrieb (Betriebsbremsantrieb - Vorwärtsfahrt) auf Spindelantrieb. (Betriebsbremsantrieb - Rückwärtsfahrt sowie Parkbremse).

Eine Drehrichtungserkennung des Fahrzeugrades ist nicht mehr erforderlich, da der Aktuator selbsttätig entsprechend dem Drehzustand der Bremsscheibe die richtige Betriebsart ausführt.

Bei dieser Ausführung der Bremse kann auch der Übergang von einem Betriebsbremszustand auf die Parkbremse mit geringem Aufwand realisiert werden.

Dies geschieht dadurch, dass im Falle einer Parkbremsung bei Zuspannung über die Spindeln gleichzeitig ohne Eintreten einer nennenswerten Spannkraftminderung die Kurbel in Ihre Anschlagposition zurückbewegt wird und nachfolgend durch weiteres Zuspannen der Spindeln die erforderliche Parkbremskraft aufgebaut wird. Dieser Vorgang könnte bei sehr großen Keilwinkeln kontinuierlich erfolgen.

In diesem Fall würde bei Öffnen der Magnet-Haltebremse bei noch drehendem Elektromotor über das Verteilgetriebe ein zusätzliches Zuspannen der Spindeln durch die zurücklaufende Kurbel erfolgen.

In der Praxis werden die anwendbaren Keilwinkel jedoch deutlich kleiner sein als für den oben beschriebenen Vorgang notwendig.

Es zeigt sich jedoch, dass auf einfache Weise und ohne zusätzliche Aktuatoren oder Sensoren der Übergang von Betriebs- auf Parkbremse durch einen mehrmaligen Wechsel von Spindelzuspannung und Lösen der Kurbel erzielt werden kann. Hierbei wird erst die Spannkraft durch Spindelzuspannung um einen möglichen Betrag bei gehaltener Kurbelposition erhöht und anschließend bei gehaltener Spindelposition die Kurbel gerade soweit gelöst dass die vorherige Spannkraft noch nicht oder nicht nennenswert unterschritten wird. Dieser Vorgang wird wiederholt, bis die Kurbel ihre Anschlagposition erreicht hat. Dann erfolgt der endgültige Aufbau der Parkbremskraft über die Spindeln.

Vorzugsweise wird ein Bremsvorganges bei einer Vorwärtsfahrt mit der erfindungsgemäßen Scheibenbremse wie folgt realisiert:
1. Der Fahrer gibt durch Betätigung des Bremspedals seinen Bremsenwunsch vor. Der Elektromotor wird in Zuspanndrehrichtung angesteuert.
2. Die Kurbel wird zur Betätigung des Bremsbelages von ihrer Anschlagposition weg in der Bremsscheibendrehrichtung gedreht. Die Spindeln sind durch ein ständig wirkendes Reibelement gehemmt, so dass auch im Anlegevorgang der Antrieb auf die Kurbel gesteuert wird.
3. Der Bremsbelag wird über die Rollkörper des SV-Systems an den Verstärkungsrampen entlang geführt und dabei entsprechend der Rampensteigung an die rotierende Bremsscheibe angelegt. Durch die entstehende Reibkraft wird der Bremsbelag zusätzlich in Drehrichtung der Bremsscheibe und somit auch der Kurbel mitgezogen und über die Verstärkungsrampen zusätzlich an die Bremsscheibe angepresst.
4. Durch die an den Rädern entstehende Bremskraft wird das Fahrzeug bis zum Stillstand verzögert.

Beim jetzt stillstehenden Rad sind zwei Fälle zu unterscheiden:
- Der Fahrer löst die Bremse durch Zurücknehmen des Bremspedals (5)
- Der Fahrer verstärkt seinen Bremsenwunsch durch stärkere Betätigung des Bremspedals (6)

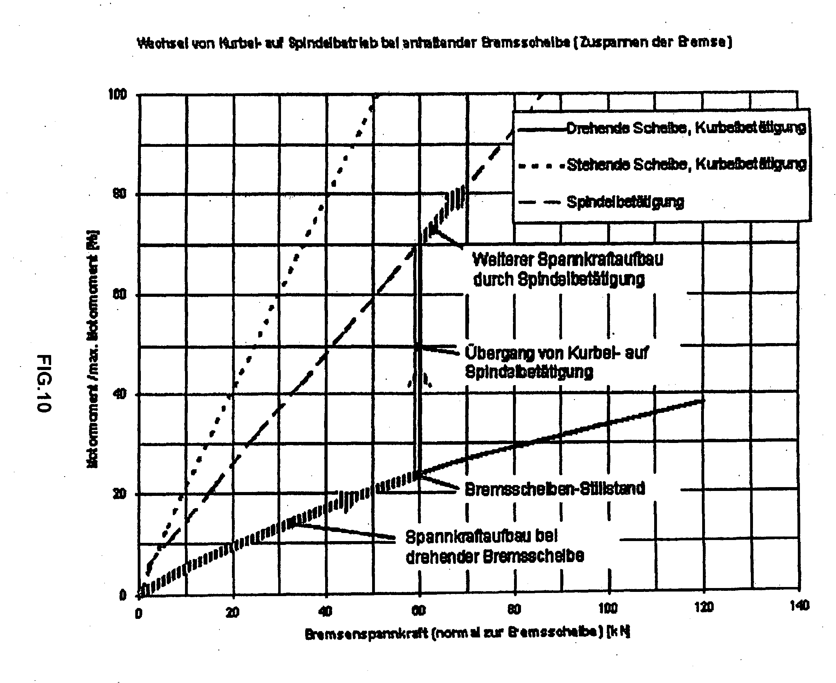

5. Der Fahrer löst die Bremse. Der E- Motor wird in Lösedrehrichtung angesteuert. Die Kurbel wird zum Lösen des Bremsbelages in ihre Anschlagposition zurückbewegt.
6. Der Fahrer verstärkt seinen Bremsenwunsch. ( Siehe Fig. 10) Da durch die stillstehende Bremsscheibe die Drehhemmung an der Kurbel höher ist als an den Spindeln lenkt das verzweigende Getriebe die Antriebsdrehbewegung auf den Spindelantrieb. Durch Verdrehen der Spindeln erfolgt eine weitere Zuspannung der Bremse. Zum Halten der Bremswirkung wird die Kurbeldrehbewegung durch die Magnetbremse blockiert..
7. Der Fahrer löst die weiter zugespannte Bremse. ( siehe Bild 2 Der E- Motor wird in Lösedrehrichtung angesteuert. Nun wird zunächst die Kurbel in ihre Anschlagposition zurückbewegt da in Löserichtung die Drehhemmung an der Spindel höher ist als an der Kurbel. Dann dreht der Elektromotor die Spindeln zurück, bis er seine vor der Bremsung bestehende Ausgangsstellung wieder erreicht hat.

Ein Bremsvorganges bei Rückwärtsfahrt lässt sich dagegen auf einfache Weise wie folgt realisieren:
1. Der Fahrer legt den Rückwärtsgang ein. Die Bremsensteuerung erhält ein Signal über den Rückwärts - Fahrzustand. Die Bremsensteuerung aktiviert die Magnetbremse in den Radbremsen indem diese bestromt werden und blockiert die Kurbeldrehbewegung.
2. Der Elektromotor wird durch das Bremssystem zur Verkleinerung des Lüftspieles über Betätigung der Spindeln angesteuert. Hierdurch wird die Ansprechzeit der Bremse bei einem nachfolgenden Bremsvorgang reduziert.
3. Der Fahrer gibt durch Betätigen des Bremspedals einen Bremsenwunsch vor.
4. Der Elektromotor wird in Zuspanndrehrichtung angesteuert und betätigt die Bremse mittels Spindelzuspannung.
5. Das Halten der Bremsposition erfolgt durch die Reibkraft der Spindeln.
6. Der Fahrer löst das Bremspedal. Der Elektromotor wird in Löserichtung angesteuert. Die Spindeln werden in die Rückwärts - Fahrstellung (verkleinertes Lüftspiel) zurückbewegt.
7. Der Fahrer legt den Vorwärtsgang ein
8. Der E- Motor wird zur Normalisierung des Lüftspieles angesteuert.
9. Die Magnetbremse wird durch das Bremssystem wieder gelöst.

In einer zweiten möglichen Betriebsart kann die Rückwärtsbremsung auch in einer Kombination von Kurbel und Spindelbetätigung ausgeführt werden. In diesem Fall ist die Kurbel vor Bremsbeginn nicht blockiert.

Bei einer Betätigung der Bremse erfolgt der Anlegevorgang mittels Kurbelbetätigung. Dann erfolgt das selbsttätige Umsteuern auf die Spindelzuspannung.

Zum Lösen der Bremse wird zunächst die Kurbel an Ihre Anschlagposition bewegt und dann die Spindeln in ihre Ausgangsposition gefahren. Derart wird eine schnelle Lüftspielüberwindung ohne eine Lüftspielverkleinerung realisiert. Es ist keine Rückwärtsfahrt-Erkennung bzw. Information erforderlich. Der Übergang in den Parkbremszustand erfordert ein Zurückführen der Kurbel in Anschlagstellung ( wie nachfolgend beschrieben).

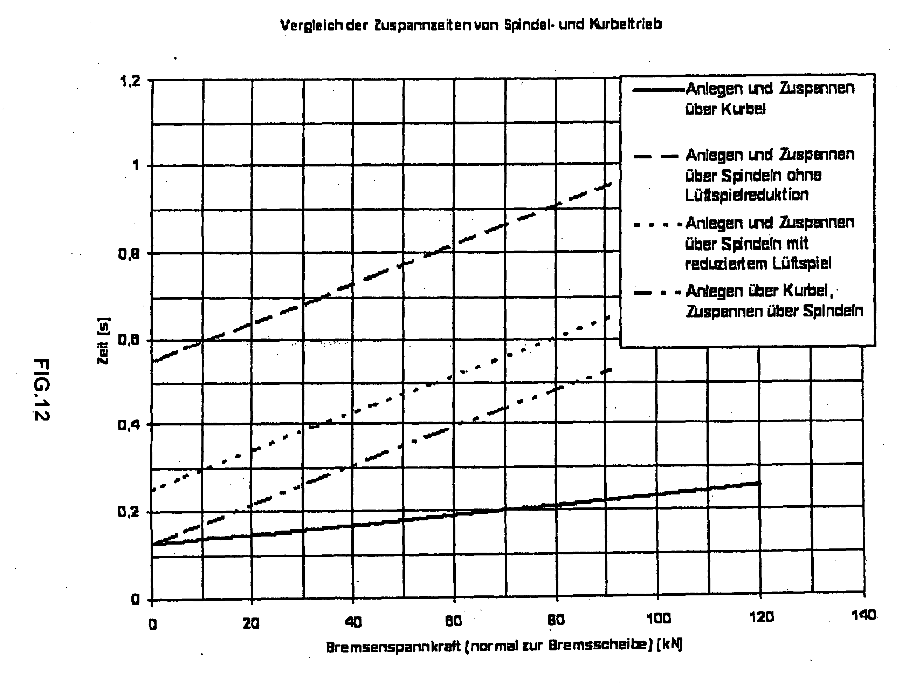

Ein Vergleich des Zeitverhaltens der drei möglichen Betriebsarten der Rückwärtsbremsung
a) Anlegen und Zuspannen über Kurbel,
b) Anlegen und Zuspannen über Spindeln, und
c) Anlegen über Kurbel und Zuspannen über Spindeln
ist in Fig. 12 gegeben, was zeigt, dass mit dem erfindungsgemäßen Verfahren ein gutes Zeitverhalten realisierbar ist, obwohl keine Selbstverstärkung in Rückwärtsfahrtrichtung genutzt wird.

Nachfolgend sei ferner ein Parkbremsvorgang ohne eine vorherige Betriebsbremsung beschrieben:
1. Der Fahrer gibt durch Betätigung des Handbremshebels seinen Parkbremswunsch vor.
2. Die Magnetbremse wird durch das Bremssystem aktiviert und blockiert den Kurbelantrieb.
3. Der Elektromotor wird in Zuspanndrehrichtung angesteuert
4. Die Spindeln werden bis zum Erreichen der geforderten Spannkraft betätigt.
5. Das Halten der Parkbremse erfolgt stromlos über die selbsthemmende Wirkung der Gewindespindeln.
6. Der Fahrer gibt durch Betätigung des Handbremshebels seinen Lösewunsch vor
7. Der Elektromotor wird in Lösedrehrichtung angesteuert
8. Die Spindeln werden in die Ausgangsstellung zurückgedreht
9. Die Magnetbremse wird durch das Bremssystem gelöst.

Beschreibung eines Parkbremsvorganges nach vorheriger Betriebsbremsung und gehaltener Betriebsbremsstellung:
1. Der Fahrer gibt bei betätigter Betriebsbremse durch Betätigen des Handbremshebels seinen Parkbremswunsch vor.
2. Die Magnetbremse wird durch das Bremssystem aktiviert und blockiert den Kurbelantrieb.
3. Der Elektromotor wird in Zuspanndrehrichtung angesteuert.
4. Die Spindeln werden bis zum Erreichen einer vorgegebenen Teilspannkraft und/oder um eine bestimmte Anzahl von Motorumdrehungen betätigt.
5. Die Magnetbremse wird gelöst.
6. Der Elektromotor wird in Löserichtung angesteuert.
7. Die Kurbel wird bis zum Erreichen einer vorgegebenen Spannkraft - Minderung und/oder um eine vorgegebene Anzahl von Motorumdrehungen zurückgedreht.

Der Vorgang 2. bis 7. wird nun solange wiederholt bis die Kurbel ihre Anschlagposition erreicht hat. Dann erfolgt der weitere Ablauf 2. bis 9. wie für den Parkbremsvorgang ohne vorherige Betriebsbremsung beschrieben.

Bei einem mehrachsigen Fahrzeug kann der Übergang von Betriebsbremse auf Parkbremse vorteilhaft so ausgeführt werden, dass einzelne Bremsen bzw. die Bremsen der einzelnen Achsen die beschriebenen Schritte 2. bis 7. versetzt zueinander ausführen. Z.B. Vorderachsbremsen beginnen mit Schritt 2..Wenn die VA-Bremsen Schritt 5. ausführen beginnen die Hinterachsbremsen mit Schritt 2. Auf diese Weise wird erreicht, dass einem geringen Lösen der Bremsen der einen Achse eine Spannkrafterhöhung der Bremsen der anderen Achse gegenübersteht.

Zusammengefaßt wird mit einer relativ einfach bauenden Bremse ohne Selbstverstärkung in Rückwärtsfahrtrichtung dennoch ein sehr gutes Bremsverhalten auch in dieser Fahrtrichtung realisiert.

Nachfolgend wird die Erfindung unter Bezug auf die Zeichnung anhand von Ausführungsbeispielen näher beschrieben. Es zeigen:
- Fig. 1: eine Skizze, welche nach Art einer Schnittansicht den prinzipiellen Aufbau einer selbstverstärkenden Scheibenbremse mit einem Nach- stellsystem für Belagverschleiß veranschaulicht;
- Fig. 2: eine als Schnittansicht gehaltene Skizze einer selbstverstärkenden Scheibenbremse;
- Fig. 3: eine erste Schnittansicht durch eine erfindungsgemäße Scheibenbrem- se;
- Fig. 4: eine Ausschnittsvergrößerung aus Fig. 3;
- Fig. 5: eine teilgeschnittene Ansicht der Scheibenbremse der Fig. 3 und 4;
- Fig. 6: eine gegenüber Fig. 3 um 90° gedrehte Schnittansicht durch die Scheibenbremse der Fig. 3;
- Fig. 7 - 9: schematisch dargestellte Abschnitte von erfindungsgemäßen Schei- benbremsen; und

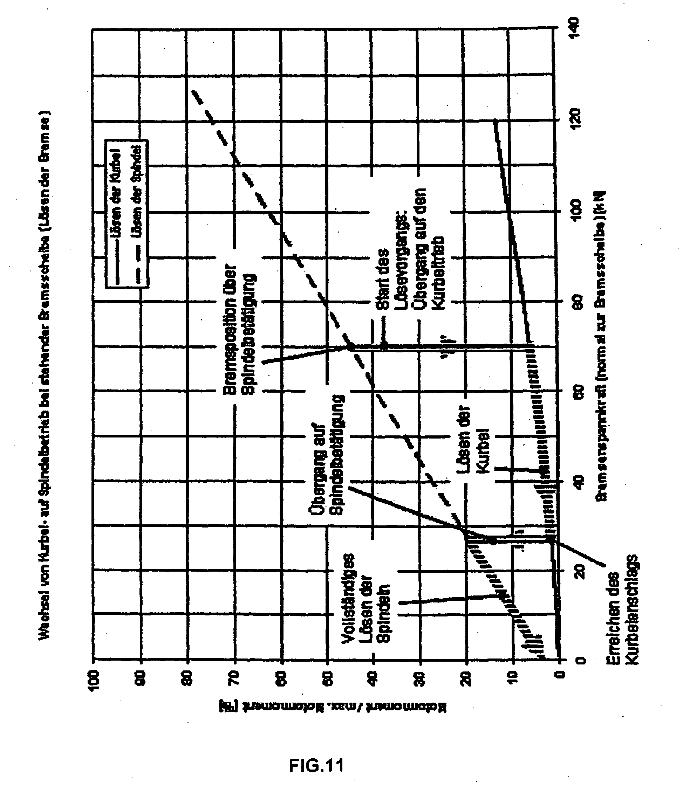

- Fig. 9 - 11: Diagramme zur Veranschaulichung des Verhaltens erfindungsgemä- ßer Scheibenbremsen im Betrieb.

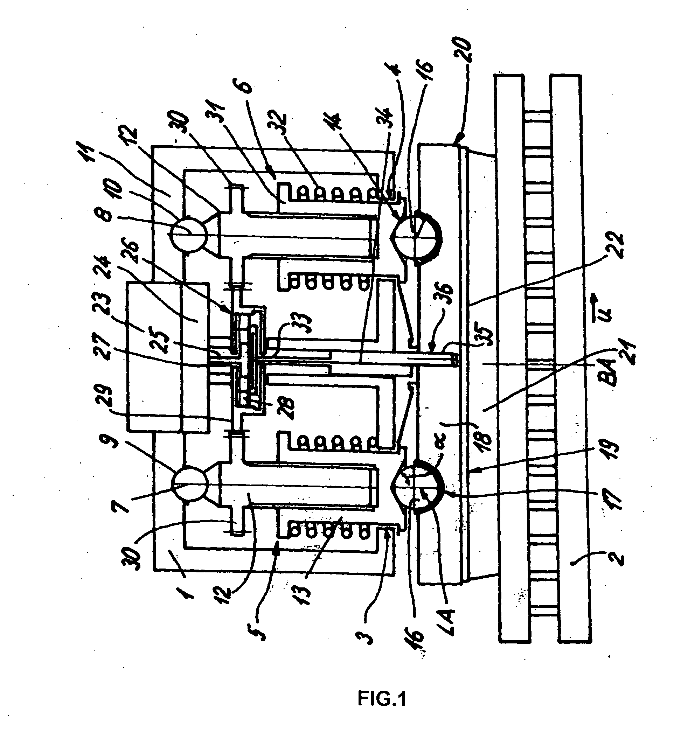

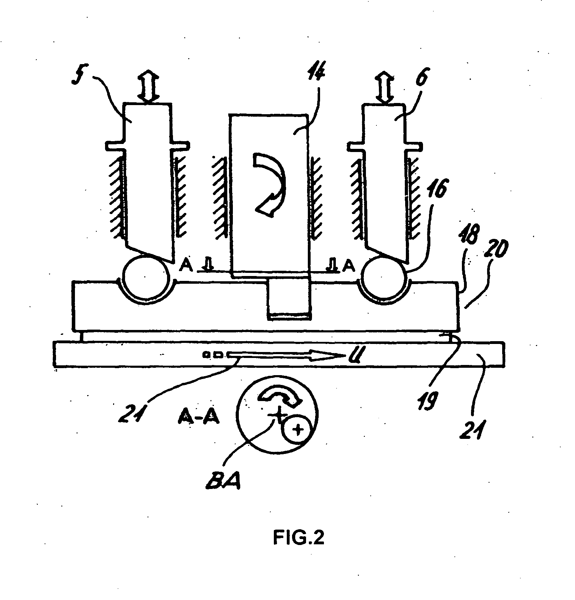

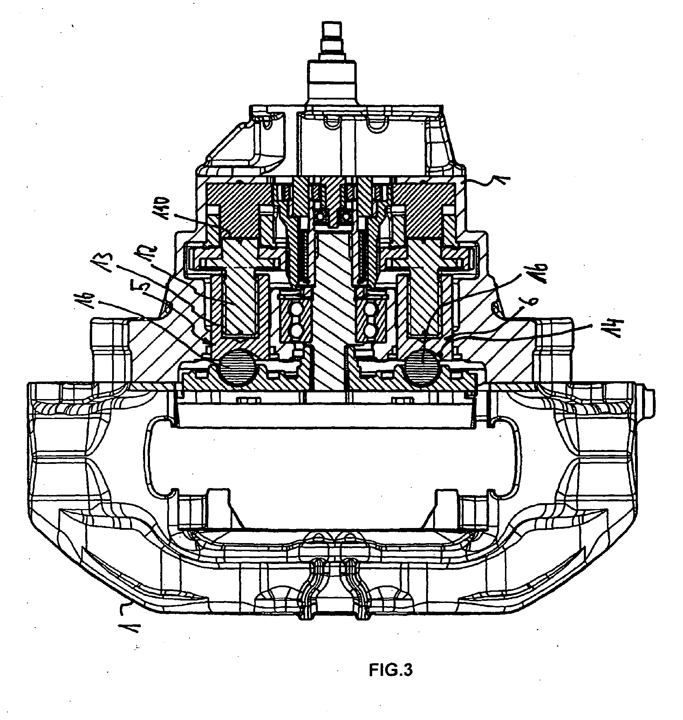

Nachfolgend sei zunächst zur Erleichterung des Verständnisses die eigene ältere, noch nicht veröffentlichte, Konstruktion der DE 10 2005 030 618.7 unter Bezug auf Fig.1 und 2 beschrieben, da diese Beschreibung das Verständnis der Konstruktion der Fig. 3 erleichtert, die auf der Konstruktion der Fig. 1 aufbaut und diese verbessert.

Bevorzugt bauen die erfmdungsgemäßen Scheibenbremsen auf einem Festsattelkonzept auf, bei dem ein ein- oder mehrteiliger Bremssattel 1 (auch Bremsengehäuse genannt) relativ zu einer Bremsscheibe 2 unbeweglich an einer Radachse befestigt ist.

Basis der nachfolgend beschriebenen Konzepte ist insofern vorzugsweise eine Festsattelbremse mit zumindest äußerer - reaktionsseitiges - elektromechanisch betätigter und elektronisch geregelter Verschleißnachstellung, die von einer zuspannseitigen Verschleißnachstellung mit Hilfe der Bremsstempel ergänzt werden kann, wenn diese zu diesem Zweck genutzt werden.

Das Wirkprinzip und die beschriebenen Merkmale sind prinzipiell auch für andere Bremsenbauarten, wie z.B. Schiebesattel- oder Schwenksattelbremsen, anwendbar. Lediglich der die Bremsbetätigung beinhaltende Sattelkopf der mechanisch/pneumatisch betätigten Basisbremse wird ersetzt durch die elektromechanischer Zuspanneinheit mit Selbstverstärkung.

Eine Festsattelbremse mit pneumatisch betätigter Zuspanneinrichtung dieser Art zeigen z.B. die DE 36 10 569 A1, die DE 37 16 202 A1 oder die EP 0 688 404 A1. Eine Festsattelbremse mit elektromotorischer Nachstellung zeigt die WO 02/14 708 A1. Derartige elektromotorische Nachtstelleinrichtungen können bei der vorgeschlagenen Ausführungsbeispielen - wenn gewünscht - jeweils zumindest reaktionsseitig angeordnet werden.

In Fig. 1 ist der Bremssattel 1 lediglich in seinem zuspannseitigen Bereich angedeutet. In der Praxis umgreift er vorzugsweise rahmenartig den oberen Umfangsbereich der Bremsscheibe und ist an einem (hier nicht zu erkennenden Achsflansch) befestigt. Eine Schnittansicht durch eine erfindungsgemäße Scheibenbremse zeigt Fig. 3.

Nach Fig.1 weist der Bremssattel 1 an seiner der Bremsscheibe 2 mit einer Bremsscheibendrehachse zugewandten Seite eine oder mehrere, vorzugsweise zwei Öffnungen 3, 4 und eine korrespondierende Anzahl von Bremsstempeln 5, 6 (hier zwei) auf, die parallel zur Bremsscheibenachse BA ausgerichtet sind.

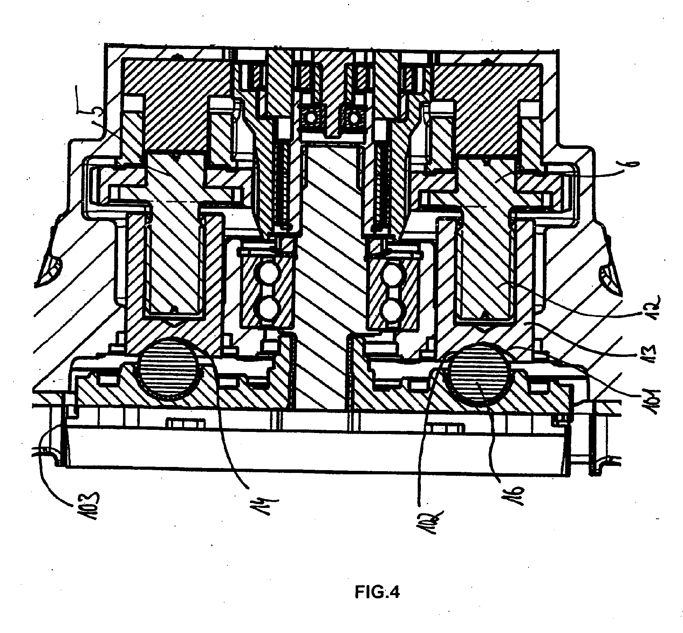

Nach Fig. 1 bis 4 sind jeweils zwei längenveränderliche Bremsstempel 5, 6 parallel zueinander angeordnet.

Die beiden Bremsstempel 5, 6 bzw. Nachstellkolben stützen sich jeweils direkt oder über zwischengeschaltete Elemente; hier Gleitlagerschalen 9, 10; an der bremsscheibenabgewandten Rückwand 11 des Bremssattels ab. Als Lagereinrichtungen werden vorzugsweise Kugeln 7, 8 mit Gleitlagerschalen 9 eingesetzt.

Die Lagereinrichtungen sind derart ausgelegt, dass sie eine Drehung der Bremsstempel 5, 6 bzw. Nachstellkolben um ihre eigene Längsachse LA erlauben.

Dabei sind jeweils im Bremsstempel 5, 6 und im Bremssattel kugelsegmentartige (kalottenartige) Ausnehmungen ausgebildet, von denen in eine (hier in die im Bremssattel) die Gleitlagerschalen 9, 10 eingesetzt ist, so dass sich die Kugeln 7, 8 relativ zur Gleitlagerschale drehen können.

Alternativ können die Kugeln 7, 8 auch als kugelförmige Ansätze an den zum Bremssattel gewandten Enden der Bremsstempel 5, 6 ausgebildet sein (hier nicht dargestellt), die dann in korrespondierende Ausnehmungen im Bremssattel mit Gleitlagerschalen eingreifen.

Denkbar sind anstelle der Kugeln und Ausnehmungen auch ebene Gleitlager 110 oder ringförmige Lager oder dgl.. (Fig. 3).

Die Bremsstempel 5, 6 weisen jeweils eine mit einem Außengewinde versehene Spindel 12 auf, auf der eine hülsenartige Mutter 13 mit einem korrespondierenden Innengewinde verdrehbar angeordnet ist. Dieses Gewinde kann je nach Auslegung nicht selbsthemmend oder selbsthemmend sein.

Die Muttern 13 weisen an ihrer von der Bremsscheibe abgewandten Seite einen Flansch 31 auf, wobei zwischen dem Flansch 31 und der Innenwandung des Bremssattels 1 jeweils Druckfedern 32 wirken, welche die Mutter 13 konzentrisch umfassen und auf den Flansch eine vorgegebene Kraft ausüben bzw. den Flansch 31 relativ zur Bremssattelinnenwandung vorspannen.

Alternativ wird die gesamte Mechanik gegen die Druckplatte verspannt.

Nach Fig. 1 bis 4 ist die Mutter 13 jedes Bremsstempels 5, 6 an der zur Bremsscheibe zugewandten Seite angeordnet und die Spindel 12 an der zum Bremssattelinneren gewandten Seite. Eine umgekehrte Anordnung wäre auch denkbar (hier nicht dargestellt).

Durch Verschrauben der Spindel 13 in der Mutter kann die axiale Länge jedes einzelnen derart ausgebildeten Bremsstempels 5, 6 - beispielsweise zum Ausgleich von Bremsbelagverschleiß und beim Anlegen der Beläge an die Bremsscheibe 2 - verstellt werden.

An ihrer der Bremsscheibe zugewandten Seite, also an ihren Druckflächen, sind die Bremsstempel 5, 6, hier die Muttern 13, jeweils mit einer rampenartigen Ausnehmung oder Kontur 14 versehen, deren tiefste Stelle vorzugsweise im Bereich der Längsachse der Bremsstempel liegt.

Es ist denkbar, mehrere Konturen vorzusehen und die Bremsstempel 5, 6 drehbar auszulegen, was hier nicht realisiert ist.

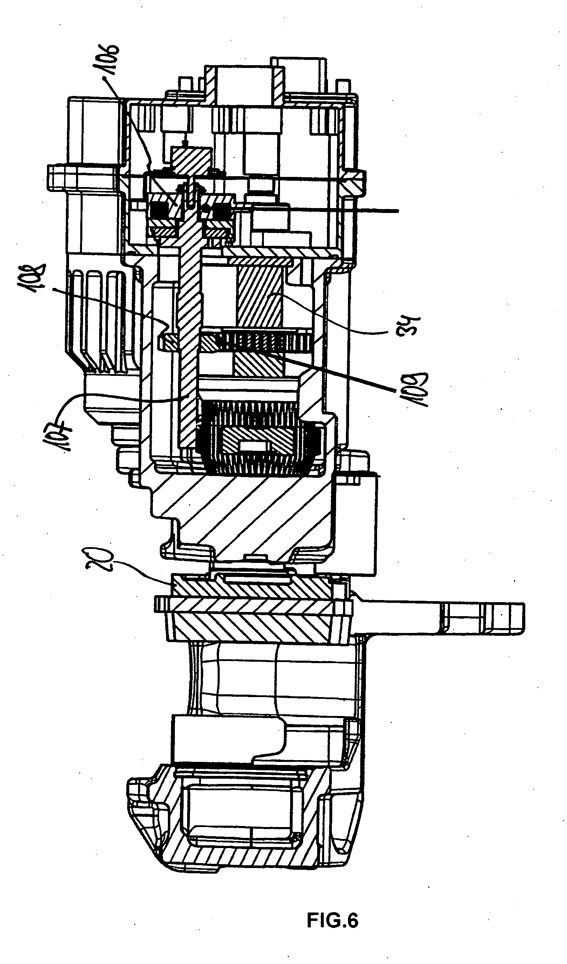

Die Ausnehmungen bzw. Laufbahnen 14 werden kegelförmig mit konstantem Öffnungs- bzw. Rampenwinkel α zur Längsachse LA oder aber z.B. nach einer besonders bevorzugten Variante vorzugsweise nach Art einer veränderlichen Kegelflächenkontur, z.B. Ovalkegelkontur ausgebildet, deren Rampenwinkel α relativ zu den Längsachsen LA der Bremsstempel 5, 6 sich in Umfangsrichtung (relativ zur Längsachse LA der Bremsstempel) verändert (z.B. stufenweise (Fig. 6) oder kontinuierlich).

In die Ausnehmungen 14 greifen jeweils Rollkörper 16 ein, die hier in bevorzugter Ausgestaltung als Kugeln 16 ausgebildet sind. Alternativ wären nach einer alternativen Ausführungsform auch z.B. zylindrische oder auf sonstige Weise geformte Rollkörper (z.B. Tonnen) denkbar, die dann z.B. auf einer rinnenartigen Ausnehmung in den Bremsstempeln abrollen würden.

Die Rollkörper 16 greifen an ihren von der Bremsscheibe abgewandten Seiten in je nach Ausgestaltung der Rollkörper ausgebildete, hier kalottenförmige Gleitlagerschalen 17, die in Ausnehmungen korrespondierender Formgebung in einer Druckplatte 18 eingesetzt sind, die an der Trägerplatte 19 eines zuspannseitigen Bremsbelages 20 mit Bremsbelagmaterial 21 anliegt, der im Bremssattel 1 parallel zur Bremsscheibendrehachse BA und in Umfangsrichtung U (bzw. Tangential bzw. parallel zur Tangentialen) relativ zur Bremsscheibe 2 beweglich angeordnet ist.

Eine Klammerfeder 22 zwischen Druckplatte 18 und Muttern 13 hält die Druckplatte 18 unter Vorspannung an den Muttern 13. Alternativ ist es auch denkbar, die Druckplatte auf andere Weise, z.B. am Gehäuse (Sattel) zu verspannen).

Zum Antrieb der Bremse dient ein elektrischer Antriebsmotor 23, dem vorzugsweise ein Untersetzungsgetriebe 24 nachgeordnet ist, dessen Abtriebswelle 25 auf ein weiteres Getriebe 26, insbesondere ein Planetengetriebe wirkt, das mittig zwischen den Spindeln angeordnet ist.

Dabei treibt die Abtriebswelle 25 ein Sonnenrad 27 des Planetengetriebes 26 , welches Planetenräder 28 mitnimmt. Die Planetenräder 28 kämmen (hier nicht detailliert dargestellt) mit dem Sonnenrad 27 und einem innen- und außenverzahnten Ring 29. Je nach Schaltzustand (Schaltbarkeit hier nicht dargestellt) setzen sie entweder den Planetenstern 33 oder den Ring 29 in Drehung. Der Ring 29 kämmt mit seiner Außenverzahnung mit Zahnrädern 30, die auf die Spindeln 12 aufgesetzt oder an diese angeformt sind.

Zum selbsttätigen Umschalten des Antriebs (z.B. ein Elektromotors) kann ein federbelasteter Kugelrastmechanismus vorgesehen sein (hier nicht dargestellt). Der Umschaltvorgang kann auch auf andere Weise realisiert werden (z.B. elektromagnetisch).

In axialer Verlängerung des Planetensterns 33 ist eine hier zylindrisch ausgebildete und parallel zur Bremsscheibenachse angeordnete Kurbel 34 vorgesehen, die an ihrer zur Bremsscheibe 2 gewandten Seite mit einem außermittig (exzentrisch) ausgebildeten, ebenfalls parallel zur Bremsscheibenachse BA parallel ausgerichteten Kurbelzapfen 35 in eine korrespondierende Öffnung 36 in einer Bremsbelageinheit eingreift, wobei die Öffnung 36 die z.B. einen zum Querschnitt des Kurbelzapfens 35 korrespondierenden Querschnitt aufweist oder aber z.B. kulissen- , insbesondere langlochartig ausgebildet ist (hier z.B. senkrecht zur Bildebene).

Die Kurbel 34 bzw. der Kurbeltrieb 35, 36 bildet eine erste Zuspannvorrichtung und die Bremsstempel 5, 6 bilden eine zweite Zuspanneinrichtung und können auch als Verschleißnachstelleinrichtungen genutzt werden.

Im Ausführungsbeispiel der Fig. 1 besteht die Betätigungseinrichtung bzw. Zuspanneinheit aus den zwei, zum Zwecke der Verschleißnachstellung längenveränderlichen Nachstellkolben bzw. Bremsstempeln 5, 6; welche in ihrer der Bremsscheibe 2 zugewandten Druckfläche die Ausnehmungen 14 nach Art von Rampenkonturen aufweisen, an denen die Rollkörper 16 ablaufen, welche die von der Bremse erzeugte Zuspannkraft auf die Bremsbelageinheit bzw. auf die auf den Bremsbelag aufliegende Druckplatte übertragen.

In der Druckfläche der Bremsbelageinheit bzw. der Druckplatte 18 sind die Rollkörper 16 über ein entgegengesetzt gestaltetes Rampenprofil (hier nicht dargestellt) oder (bevorzugt, da die Rollkörper besonders sicher geführt sind; hier dargestellt) in dem Gleitlagerbett (Gleitlagerschalen 17) aufgenommen.

Die Bremsbelageinheit, hier bestehend aus der ein- oder mehrteiligen Kombination von Bremsbelag 20 und Druckplatte 18, wird federnd so gegen die Bremsstempel und Nachstellkolben 5, 6 gedrückt, dass die dazwischen angeordneten Rollkörper 16 zwischen der Bremsbelageinheit und den Bremsstempel elastisch eingespannt sind.

Die Betätigung der Bremse erfolgt nach einem Anlegevorgang des Bremsbelages 20 an die Bremsscheibe durch ein Verschieben der Druckplatte nebst Bremsbelag 20 parallel zur Reibfläche der Bremsscheibe in Drehrichtung bzw. Umfangsrichtung derselben.

Diese Verschiebung wird vorzugsweise durch den Kurbeltrieb 35, 36 bewirkt, der mit einem Abtriebs- und hier Kurbelzapfen 35 etwa mittig an der Druckplatte 18 der Bremsbelageinheit 18, 20 angreift und parallel zur Rotationsachse der Bremsscheibe im Zuspanngehäuse - Bremssattel - 1 gelagert wird.

Die Betätigung des Kurbeltriebes erfolgt über den elektrischen Antrieb, z.B. den Elektromotor 23 mit nachgeschaltetem Getriebe 24.

Nach Fig. 3 ff wird das Grundkonzept der Fig.1 und 2 entscheidend weiterentwickelt.

So wird zunächst die selbstverstärkende Wirkung nur bei der Vorwärtsfahrt genutzt. Entsprechend ist an den rampenartigen Ausnehmungen 14 lediglich eine Rampenkontur 101 in Vorwärtsfahrtrichtung (in Fig. 3 nach rechts hin) ausgebildet.

In Rückwärtsfahrtrichtung ist die Kontur 102 der rampenartigen Ausnehmungen 14 dagegen derart, dass der Rollkörper 16 in ihnen formschlüssig aufgenommen sind.

Damit können die Rollkörper in Rückwärtsfahrt nicht an Rampen auflaufen. Die Bremsbelageinheit legt sich dementsprechend bei Bremsungen in der Rückwärtsfahrtrichtung an einem sattelfesten Widerlager 103 an.

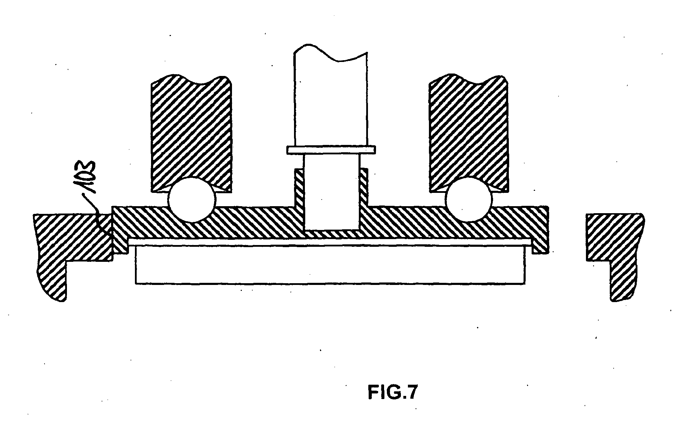

In Fig. 7 wird ein Auflaufen an den rampenartigen Ausnehmungen in der Rückwärtsfahrtrichtung dadurch verhindert, dass die Bremsbelageinheit an dem Widerlager zur Anlage kommt, bevor sie an den Rampen auflaufen kann.

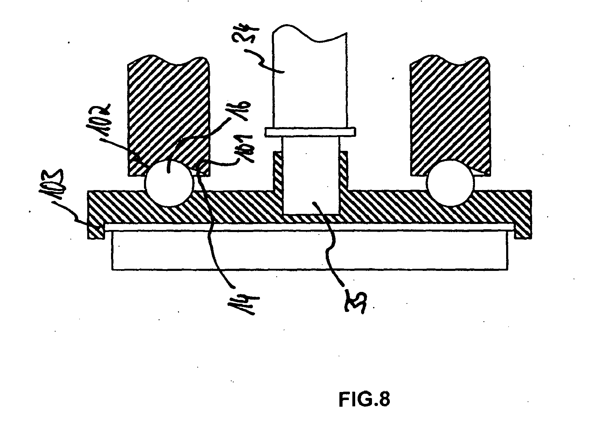

Die Prinzipskizze der Fig. 8 entspricht in dieser Hinsicht der Bauart der Fig. 3.

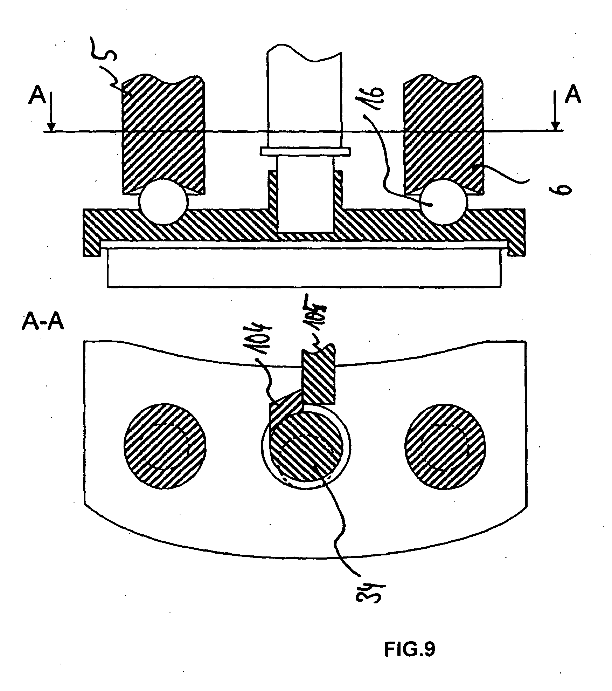

In Fig. 9 ist an der Kurbel 34 selbst ein Anschlag 104 angeordnet, der an einem sattelfesten Widerlager 105 zur Anlage kommt, wenn die Kurbel 34 in Rückwärtsrichtung dreht.

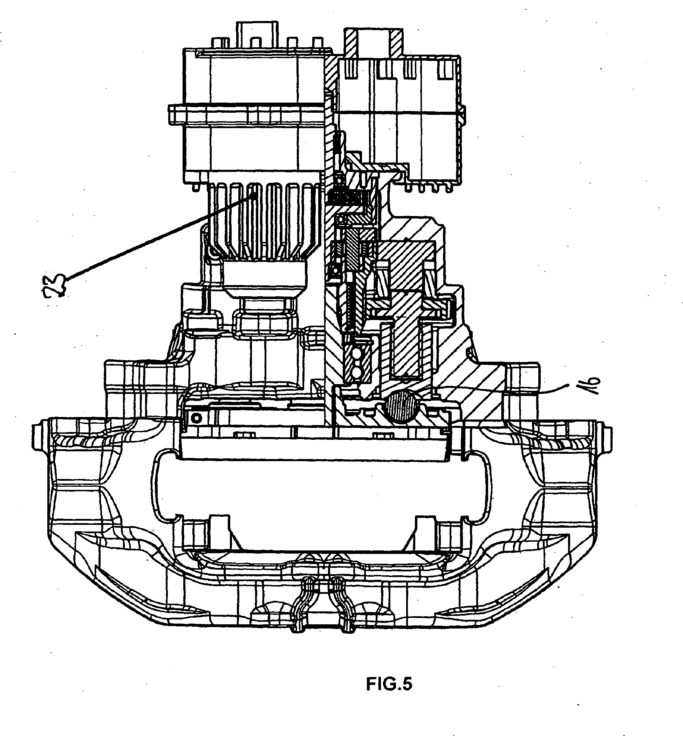

Die Bremse der Fig. 3 bis 6 weist ferner - wie in Fig. 6 zu erkennen - eine Einrichtung zum Blockieren der Drehung der Kurbel auf.

Diese Blockiereinrichtung wird nach Fig. 6 durch eine Magnethaltebremse 106 realisiert, die dazu ausgelegt ist, die Drehung einer Welle 107 freizugeben oder zu blockieren, die parallel zur Kurbel 34 angeordnet ist und die ein Zahnrad 108 trägt, das mit einer Außenverzahnung 109 auf der Kurbel kämmt.

Der Antriebsmotor erhält eindeutige Drehrichtungsvorgaben. Die Antriebs - und die Lösedrehrichtung des Elektromotors sind für Vorwärts - und Rückwärtsfahrt gleich.

Eine vorteilhafte Voraussetzung ist das selbsttätige Umsteuern von Kurbelantrieb (Betriebsbremsantrieb - Vorwärtsfahrt) auf Spindelantrieb. (Betriebsbremsantrieb - Rückwärtsfahrt sowie Parkbremse). Dies wird mit der Blockiereinrichtung realisiert, die sich zu Nutze macht, dass die Bremsstempel aus Spindel 12 und Mutter 13 selbsthemmend ausgelegt sind, während die Getriebeverbindung vom Elektromotor zur Kurbel 34 nichtselbsthemmend ausgelegt ist.

Die Auslegung ist insgesamt derart, dass bei nicht aktivierter Blockiereinrichtung bei Drehungen des Elektromotors die Kurbel 34 gedreht wird, während bei aktivierter Blockiereinrichtung die Spindel drehen, wenn sich der Elektromotor dreht.

Eine Drehrichtungserkennung des Fahrzeugrades ist nicht mehr erforderlich, da der Aktuator derart selbsttätig entsprechend dem Drehzustand der Bremsscheibe die richtige Betriebsart ausführt.

Derart sind insbesondere die eingangs erörterten Betriebsarten realisierbar. Bei Zuspannen für Bremsungen in Rückwärts- und Vorwärtsrichtung dreht der Elektromotor 23 stets in die gleiche Richtung.

## Patentansprüche

1. Scheibenbremse in selbstverstärkender Bauart, mit elektrischem Aktuator, bei der eine vom Aktuator aufgebrachte Betätigungskraft mit Hilfe einer zwischen Aktuator und Bremsbelag angeordneten Selbstverstärkungseinrichtung verstärkt wird, mit folgenden Merkmalen:
a) eine Zuspanneinheit zum Zuspannen wenigstens einer Bremsbelageinheit (20) einseits einer Bremsscheibe (2) unter Durchführung einer Zuspannbewegung der Bremsbelageinheit (20) zur Bremsscheibe (2), die in wenigstens eine parallel und wenigstens eine relativ zur Bremsscheibendrehachse (BA) tangential verlaufende Bewegungskomponente (Richtung U) zerlegbar ist,
b) wenigstens einem elektromotorischen Antrieb (23) als Aktuator zum Betätigen der Zuspanneinheit,
c) wobei die Zuspanneinheit ein verzweigendes Getriebe (24) aufweist, das zwei Abtriebszweige aufweist, wobei der erste Abtriebszweig mit einer ersten Zuspannvorrichtung und der zweite Abtriebszweig mit einer zweiten Zuspannvorrichtung (5. 6) in Wirkverbindung steht,
**dadurch gekennzeichnet, dass**
d) die Zuspanneinheit ferner derart ausgelegt ist, dass sie bei Bremsungen in Vorwärts- und Rückwärtsfahrtrichtung zwischen der ersten und der zweiten Zuspannvorrichtung vorzugsweise selbsttätig oder gesteuert umschaltbar ist, und
e) durch eine Auslegung des Getriebes (214) und der ersten und zweiten Zuspannvorrichtung derart, dass die Drehrichtung des Elektromotors (23) bei Bremsungen in Vorwärts- und Rückwärtsrichtung vorzugsweise gleich ist.

2. Scheibenbremse nach Anspruch 1, **dadurch gekennzeichnet, dass** der Antriebsstrang zwischen dem verzweigenden Getriebe (24) und der Bremsbelageinheit (20) über die ersten Zuspannvorrichtung (34, 35, 36) nicht selbsthemmend ausgelegt ist und dass der Abtriebsstrang zwischen dem verzweigenden Getriebe (20) und der Bremsbelageinheit über die zweite Zuspannvorrichtung (5, 6) selbsthemmend ausgelegt ist.

3. Scheibenbremse nach Anspruch 1 oder 2, **dadurch gekennzeichnet, dass** die erste Zuspannvorrichtung als Kurbeltrieb (34, 35, 36) ausgelegt ist.

4. Scheibenbremse nach Anspruch 3, **dadurch gekennzeichnet, dass** der Kurbeltrieb nicht selbsthemmend ausgelegt ist.

5. Scheibenbremse nach einem der vorstehenden Ansprüche, **dadurch gekennzeichnet, dass** die zweite Zuspannvorrichtung wenigstens einen oder mehrere axial längenveränderliche Bremsstempel (Nachstellkolben 5, 6) aufweist, wobei zwischen den Druckflächen der Bremstempel und den Bremsbelageinheit wenigstens ein Rollkörper (16) angeordnet ist, der dazu ausgelegt ist, lediglich bei Bremsungen in Vorwärtsfahrtrichtung an einer Rampen- bzw. Keilkontur an den Bremsstempeln und/oder der Bremsbelageinheit aufzulaufen.

6. Scheibenbremse nach einem der vorstehenden Ansprüche, **dadurch gekennzeichnet, dass** die Bremsstempel (5, 6) jeweils eine mit einem Außengewinde versehene drehbare Spindel (12) aufweisen, auf der eine längsverschiebliche Mutter (13) mit einem korrespondierenden Innengewinde angeordnet ist.

7. Scheibenbremse nach einem der vorstehenden Ansprüche, **dadurch gekennzeichnet, dass** ein Gewinde zwischen der Spindel (12) und der Mutter selbsthemmend ausgelegt ist.

8. Scheibenbremse nach einem der vorstehenden Ansprüche, **dadurch gekennzeichnet, dass** das verzweigende Getriebe (24) ein Planetengetriebe ist.

9. Scheibenbremse nach einem der vorstehenden Ansprüche, **gekennzeichnet durch** eine Umschalteinrichtung zum Umschalten zwischen einer Zuspannung der Bremsbelageinheit über die erste oder die zweite Zuspanneinrichtung.

10. Scheibenbremse nach Anspruch 9, **dadurch gekennzeichnet, dass** die Umschalteinrichtung als Blockiereinrichtung zum Blockieren von Drehungen des Kurbeltriebs (34, 35, 36) ausgelegt ist.

11. Scheibenbremse nach einem der vorstehenden Ansprüche, **gekennzeichnet durch** einen Anschlag zum Begrenzen der relativ zur Bremsscheibe tangentialen Bewegung der Bremsbelageinheit bei Bremsungen während Rückwärtsfahrten, der derart ausgelegt ist, dass die Bremse bei Bremsungen während einer Rückwärtsfahrt im wesentlichen nur senkrecht zur Bremsscheibe bewegt wird.

12. Scheibenbremse nach einem der vorstehenden Ansprüche, **dadurch gekennzeichnet, dass** der Elektromotor (23) direkt oder über wenigstens eines oder mehrere Getriebe (24, 26, 37) die Kurbel (34) dreht, die einen Kurbelzapfen (35) aufweist, der zur Bewegung der Bremsbelageinheit tangential zur Bremsscheibe, d.h. parallel zur Bremsscheibenreibfläche, dient.

13. Scheibenbremse nach einem der vorstehenden Ansprüche, **dadurch gekennzeichnet, dass** die Bremsbelageinheit die Druckplatte (18) aufweist, die an der Bremsbelagträgerplatte (19) eines Bremsbelages (20) anliegt.

14. Scheibenbremse nach einem der vorstehenden Ansprüche, **dadurch gekennzeichnet, dass** der Kurbelzapfen (35) sich parallel zur Bremsscheibenachse (BA) erstreckt und in eine korrespondierend ausgerichtete Öffnung in der Druckplatte (18) eingreift.

15. Verfahren zum Ansteuern einer selbstverstärkenden Bremse nach einem der vorstehenden Ansprüche, **dadurch gekennzeichnet, dass** bei Bremsungen in Vorwärtsfahrtrichtung die erste Zuspannvorrichtung und bei Bremsungen in Rückwärtsfahrtrichtung die zweite Zuspannvorrichtung zum Zuspannen der Bremse verwendet wird.

16. Verfahren nach Anspruch 15, **dadurch gekennzeichnet, dass** bei Bremsungen in Vorwärtsfahrtrichtung die erste Zuspannvorrichtung und bei Bremsungen in Rückwärtsfahrtrichtung die zweite Zuspannvorrichtung zum Zuspannen der Bremse verwendet wird.

17. Verfahren nach einem der vorstehenden Ansprüche 15 oder 16, **dadurch gekennzeichnet, dass** bei Bremsungen in Vorwärtsfahrtrichtung die erste Zuspannvorrichtung in Kombination mit der Selbstverstärkungseinrichtung und bei Bremsungen in Rückwärtsfahrtrichtung die zweite Zuspannvorrichtung ohne Selbstverstärkungseinrichtung zum Zuspannen der Bremse verwendet wird.

18. Verfahren nach Anspruch 15, 16 oder 17, **dadurch gekennzeichnet, dass**
a) ein Bremsvorgang bei einer Vorwärtsfahrt wie folgt durchgeführt wird:
i. der Elektromotor wird in Zuspanndrehrichtung angesteuert,
ii. die Kurbel wird zur Betätigung des Bremsbelages von ihrer Anschlagposition weg in der Bremsscheibendrehrichtung gedreht, wobei die Spindeln gehemmt sind, so dass auch im Anlegevorgang der Antrieb auf die Kurbel gesteuert wird.
iii. der Bremsbelag wird über die Rollkörper an den Verstärkungsrampen entlang geführt und dabei entsprechend der Rampensteigung an die rotierende Bremsscheibe angelegt, wobei durch die entstehende Reibkraft der Bremsbelag zusätzlich in Drehrichtung der Bremsscheibe und somit auch der Kurbel mitgezogen und über die Verstärkungsrampen zusätzlich an die Bremsscheibe angepresst wird,
iv. durch die an den Rädern entstehende Bremskraft wird das Fahrzeug - ggf. bis zum Stillstand - verzögert,
b) und dass ein Bremsvorgang bei Rückwärtsfahrt wie folgt durchgeführt wird:
i. eine Steuereinheit der Bremse erhält ein Signal über den Rückwärts-Fahrzustand,
ii. die Kurbeldrehbewegung wird blockiert, und
iii. die Spindeln werden verdreht, bis über die Zuspannung über die Bremsstempel die gewünschte Zuspannkraft erreicht wird.

19. Verfahren nach einem der vorstehenden Ansprüche 15 bis 18, **dadurch gekennzeichnet, dass** nach einer Bremsung in Vorwärtsrichtung zum Lösen der Elektromotor in Löserichtung angesteuert und die Kurbel zum Lösen des Bremsbelages in ihre Anschlagposition zurückbewegt wird.

20. Verfahren nach einem der vorstehenden Ansprüche 15 bis 19, **dadurch gekennzeichnet, dass** bei einem weiter verstärkten Bremsen, in dem Fall, dass durch die stillstehende Bremsscheibe die Drehhemmung an der Kurbel höher ist als an den Spindeln lenkt, das verzweigende Getriebe die Antriebsdrehbewegung auf den Spindelantrieb umlenkt, so dass durch Verdrehen der Spindeln eine weiteres Zuspannung der Bremse erfolgt.

21. Verfahren nach einem der vorstehenden Ansprüche 15 bis 20, **dadurch gekennzeichnet, dass** zum Halten der Bremswirkung die Kurbeldrehbewegung durch die Blockiereinrichtung, insbesondere Magnethaltebremse blockiert wird.

22. Verfahren nach einem der vorstehenden Ansprüche 15 bis 21, **dadurch gekennzeichnet, dass** in dem Fall, dass der Fahrer die weiter zugespannte Bremse löst, der E- Motor in Lösedrehrichtung angesteuert wird und dann die Kurbel in ihre Anschlagposition zurückbewegt wird und dass dann der Elektromotor die Spindeln bzw. Bremsstempel zurückdreht, bis er seine vor der Bremsung bestehende Ausgangsstellung wieder erreicht hat.

23. Verfahren nach einem der Ansprüche 15 bis 22, **dadurch gekennzeichnet, dass** das Halten der Bremsposition in Rückwärtsfahrtrichtung durch die Reibkraft der Spindeln erfolgt.

24. Verfahren nach Anspruch 23, **dadurch gekennzeichnet, dass** direkt nach dem Einlegen des Rückwärtsganges des Fahrzeugs des Elektromotors durch das Bremssystem zur Verkleinerung des Lüftspieles über Betätigung der Spindeln angesteuert wird, um die Ansprechzeit der Bremse bei einem nachfolgenden Bremsvorgang zu reduzieren.

25. Verfahren nach einem der vorstehenden Ansprüche 23 oder 24, **dadurch gekennzeichnet, dass** zum Lösen einer Bremsung in Rückwärtsfahrhichtung der Elektromotor in Löserichtung angesteuert wird und die Spindeln in die Rückwärts - Fahrstellung (verkleinertes Lüftspiel) zurückbewegt werden.

26. Verfahren nach einem der vorstehenden Ansprüche 23, 24 oder 25, **dadurch gekennzeichnet, dass** bei einem erneuten Wechsel in Vorwärtsfahrtrichtung mit den Spindeln das Lüftspiel eingestellt wird.

27. Verfahren nach einem der vorstehenden Ansprüche 23 bis 26, **dadurch gekennzeichnet, dass** die Rückwärtsbremsung in einer Kombination von Kurbel und Spindelbetätigung ausgeführt wird, so dass die Kurbel vor Bremsbeginn nicht blockiert ist, wobei bei einer Betätigung der Bremse erfolgt der Anlegevorgang mittels Kurbelbetätigung und dann das selbsttätige Umsteuern auf die Spindelzuspannung erfolgt.

28. Verfahren nach einem der vorstehenden Ansprüche 23 bis 27, **dadurch gekennzeichnet, dass** die Rückwärtsbremsung **dadurch** gelöst wird, dass zum Lösen der Bremse zunächst die Kurbel an Ihre Anschlagposition bewegt und dann die Spindeln in ihre Ausgangsposition gefahren wird.

## Claims

1. Disc brake of the self-energising type, with an electric actuator, wherein an operating force applied by said actuator is amplified by means of a self-energising device disposed between said actuator and the brake lining, presenting the following features:
a) a brake application unit for applying at least one brake lining unit (20) on one side of a brake disc (2), thus carrying out a movement of application of said brake lining unit (20) towards said brake disc (2), with the brake application movement being adapted to be decomposed into at least one component of movement extending in parallel and into at least one component of movement (direction U) tangentially extending relative to the axis of revolution of the brake disc (BA),
b) at least one electromotor drive system (23) as actuator for operating said brake application device,
c) wherein said brake application device comprises a branching transmission mechanism (24) including two output branches, whereof the first output branch is functionally connected to a first brake application means whereas the second output branch is functionally connected to a second brake application means (5, 6),
**characterised in that**
(d) said brake application unit is moreover so designed that it may be changed over, preferably for automatic or controlled change-over, in the case of brake application operations in the directions of forward or reverse movement, and
(e) by such a design of the transmission mechanism (214) and of said first and second brake application devices that the sense of rotation of the electric motor (23) is preferably equal in case of brake application operations in the forward and reverse directions.

2. Disc brake according to Claim 1, **characterised in that** the power train between said branching transmission mechanism (24) and said brake lining unit (20) via said first brake application device (34, 35, 36) is not designed for self-locking operation, and that the power train between said branching transmission mechanism (20) and said brake lining unit via said second brake application device (5, 6) is designed for self-locking operation.

3. Disc brake according to Claim 1 or 2, **characterised in that** said first brake application device is designed as crank mechanism (34, 35, 36).

4. Disc brake according to Claim 3, **characterised in that** said crank mechanism is not designed for self-locking operation.

5. Disc brake according to any of the preceding Claims, **characterised in that** said second brake application device comprises at least one or several braking pistons variable in terms of their axial length (readjusting pistons 5, 6), with at least one rolling element (16) being disposed between the pressing areas of said braking pistons and said brake lining unit, which is designed for running up a ramp-shaped or wedged-shaped contour on said braking pistons and/or of said brake lining unit only in the case of brake application in the direction of forward movement.

6. Disc brake according to any of the preceding Claims, **characterised in that** each of said brake pistons (5, 6) comprises a respective spindle (12) provided with an external rotatable screw thread, on which a nut (13) is disposed that is displaceable along the longitudinal direction and presents a corresponding internal screw thread.

7. Disc brake according to any of the preceding Claims, **characterised in that** a screw thread between said spindle (12) and said nut is designed for self-locking operation.

8. Disc brake according to any of the preceding Claims, **characterised in that** said branching transmission mechanism (24) is a planetary gear mechanism.

9. Disc brake according to any of the preceding Claims, **characterised by** a change-over means for changing over between modes of operation of brake lining unit application via said first or via said second brake application means.

10. Disc brake according to any of the preceding Claims, **characterised in that** said change-over means is designed in the form of a locking means for locking the revolutions of said crank mechanism (34, 35, 36).

11. Disc brake according to any of the preceding Claims, **characterised by** a stop dog for limiting the tangential movement, relative to said brake disc, of said brake lining unit in the case of brake application operation during movement in the reverse direction, which stop dog is so designed that the brake is substantially moved only orthogonally on said brake disc during movement in the reverse direction.

12. Disc brake according to any of the preceding Claims, **characterised in that** said electric motor (23) rotates said crank (34) directly or via at least one or several gear mechanisms (24, 26, 37), with this crank comprising a crank pin (35) serving to move said brake lining unit tangentially relative to said brake disc, i.e. in parallel with the friction area of the brake disc.

13. Disc brake according to any of the preceding Claims, **characterised in that** said brake lining unit comprises the brake application plate (18) bearing against the brake lining support plate (19) of a brake lining (20).

14. Disc brake according to any of the preceding Claims, **characterised in that** said crank pin (35) extends in parallel with the axis of the brake disc (BA) and is engaged in an opening of corresponding orientation in said brake application plate (18).

15. Method of controlling a self-energising brake according to any of the preceding Claims, **characterised in that** in the event of brake application operations in the direction of forward movement, said first brake application device is used whilst in the event of brake application operations in a direction of reverse movement said second brake application device is used for applying the brake.

16. Method according to Claim 15, **characterised in that** in the event of brake application operations in the direction of forward movement, said first brake application device is used whilst in the event of brake application operations in the direction of reverse movement said second brake application device is used for applying the brake.

17. Method according to any of the preceding Claims 15 or 16, **characterised in that** in the event of brake application operations in the direction of forward movement, said first brake application device is used in combination with said self-energising means whilst in the event of brake application operations in the direction of reverse movement, said second brake application device is used without a self-energising means for applying the brake.

18. Method according to Claim 15, 16 or 17, **characterised in that**
(a) a brake application cycle in forward movement is performed as follows:
i. said electric motor is controlled in the sense of rotation corresponding to brake application,
ii. said crank is rotated away from its contacting position in the direction of rotation of the brake disc for operation of said brake lining, with said spindles being locked, so that the driving momentum acting upon said crank is controlled also during the brake application operation;
iii. the brake lining is passed via said rolling elements along said amplifying ramps and applied against the rotating brake disc in correspondence with the ramp inclination, with the friction force so created thus carrying along said brake lining additionally in the sense of rotation of said brake disc and hence also the crank and pressing same via said amplifying ramps additionally against said brake disc,
iv. the braking force produced on the wheels decelerates the vehicle - if required up to standstill,
(b) and that a brake application operation in reverse movement is performed as follows:
i. a controller of the brake receives a signal indicating the vehicle condition in reverse movement,
ii. the rotating movement of said crank is blocked, and
iii. the spindles are rotated until the desired brake application force is achieved on account of brake application via said brake pistons.

19. Method according to any of the preceding Claims 15 to 18, **characterised in that** after a brake application operation in the forward direction, said electric motor is controlled in the release direction for brake release while said crank is returned into its contacting position for releasing said brake lining.

20. Method according to any of the preceding Claims 15 to 19, **characterised in that** in the event of persistently amplified brake application, said branching transmission mechanism re-directs the driving rotating movement acting upon said spindle drive in the case that on account of the brake disc at standstill the rotation-locking action on said crank exceeds the same on said spindles, so that brake application is continued due to rotation of said spindles.

21. Method according to any of the preceding Claims 15 to 20, **characterised in that** the rotating movement of said crank is locked by said locking means, in particular a magnetic holding brake, for holding the braking effect.

22. Method according to any of the preceding Claims 15 to 21, **characterised in that** in the event that the driver releases the persistently applied brake, the electric motor is controlled in the sense of rotation for release and that then the crank is returned into its contacting position, and that then the electric motor rotates and returns said spindles or brake pistons, respectively, until it will have reached its initial position existing prior to the brake application operation.

23. Method according to any of the preceding Claims 15 to 22, **characterised in that** the braking position in the direction of reverse movement is retained by the friction force of said spindles.

24. Method according to Claim 23, **characterised in that** immediately after shifting the car into reverse, said electric motor is controlled by said brake system via the operation of said spindles so as to reduce the air gap in order to reduce the response delay of the brake in a subsequent brake application cycle.

25. Method according to any of the preceding Claims 23 or 24, **characterised in that** for release of the braking effect in the direction of reverse movement, said electric motor is controlled in the release direction and said spindles are returned into the position of reverse movement (reduced air gap).

26. Method according to any of the preceding Claims 23, 24 or 25, **characterised in that** the air gap is adjusted by means of said spindles in the event of a repeated change into the direction of forward movement.

27. Method according to any of the preceding Claims 23 to 26, **characterised in that** the brake application in the direction of reverse movement is carried out in a combination of crank operation and spindle operation so that said crank is not locked prior to the beginning of the brake application cycle, with the operation of brake application being carried out by operation of the crank in the event of operation of the brake system, whereupon the automatic change-over to application by means of said spindles takes place.

28. Method according to any of the preceding Claims 23 to 27, **characterised in that** the condition of brake application in the direction of reverse movement is released by moving initially the crank to its contacting position for brake release and then the spindles are moved into their starting position.

## Revendications

1. Frein à disque en conception à renfort automatique, à un acteur électrique, dans lequel un effort d'actionnement appliqué par ledit acteur est renforcé moyennant un dispositif de renfort automatique disposé entre ledit acteur et la garniture de frein, présentant les caractéristiques suivantes :
a) une unité de serrage à serrer au moins une unité à garniture de frein (20) d'un côté d'un disque de frein (2), en réalisant un mouvement de serrage de ladite unité à garniture de frein (20) vers ledit disque de frein (2), au mouvement de serrage de frein étant apte à être décomposé en au moins un composant de mouvement s'étendant en parallèle et en au moins un composant de mouvement (direction U) s'étendant tangentiellement relativement à l'axe de révolution du disque de frein (BA),
b) au moins un moyen d'entraînement électromoteur (23) en tant que l'acteur à actionner ledit dispositif de serrage de frein,
c) dans lequel ledit dispositif de serrage de frein comprend un mécanisme de transmission ramifiant (24) comprenant deux branches de sortie, dont la première branche de sortie se trouve en connexion de travail avec un premier dispositif de pendant que la deuxième branche de sortie se trouve en connexion de travail avec un deuxième dispositif de serrage (5, 6),
**caractérisé en ce**
**d) que** ladite unité de serrage de frein est, au plus, conçu d'une telle façon, qu'elle soit commutable, de préférence automatiquement ou sous commande, entre lesdits premier et deuxième dispositifs de serrage de frein, et
e) par une conception dudit mécanisme de transmission (214) ainsi que desdits premier et deuxième dispositifs de serrage d'une telle façon, que le sens de révolution dudit moteur électrique (23) soit le même, de préférence, au cas des actions de serrage en sens de marche en avant et de marche arrière.

2. Frein à disque selon la revendication 1, **caractérisé en ce que** la ligne de commande entre ledit mécanisme de transmission ramifiant (24) et ladite unité à garniture de frein (20) via ledit premier dispositif de serrage (34, 35, 36) est conçu d'une façon non autobloquant et **en ce que** la ligne de commande de sortie entre ledit mécanisme de transmission ramifiant (20) et ladite unité à garniture de frein via ledit deuxième dispositif de serrage (5, 6) est conçu de façon à être autobloquant.

3. Frein à disque selon la revendication 1 or 2, **caractérisé en ce que** ledit premier dispositif de serrage de frein est conçu sous forme d'un mécanisme à bielle et manivelle (34, 35, 36).

4. Frein à disque selon la revendication 3, **caractérisé en ce que** ledit mécanisme à bielle et manivelle est conçu de façon non autobloquant.

5. Frein à disque selon une quelconque des revendications précédentes, **caractérisé en ce que** ledit deuxième dispositif de serrage comprend un ou plusieurs pistons de frein à longueur axiale variable (pistons de réajustage 5, 6), à au moins un corps de roulement (16) étant disposé entre les aires de pression desdits pistons de frein et ladite unité à garniture de frein, qui est conçu à la fin qu'il ne monte le long d'un contour en rampe ou respectivement en coin auxdits pistons de frein et/ou de ladite unité à garniture de frein qu'au cas de serrage de frein en direction de marche en avant.

6. Frein à disque selon une quelconque des revendications précédentes, **caractérisé en ce que** chacun desdits pistons de frein (5, 6) comprend une broche rotative respective (12) pourvue d'un filetage extérieur, sur laquelle est disposé un écrou (13) déplaçable en sens longitudinal, à un filetage correspondant intérieur.

7. Frein à disque selon une quelconque des revendications précédentes, **caractérisé en ce qu'**un filetage entre ladite broche (12) et ledit écrou est conçu à blocage automatique.

8. Frein à disque selon une quelconque des revendications précédentes, **caractérisé en ce que** le dit mécanisme de transmission ramifiant (24) est une boîte à engrenages planétaires.

9. Frein à disque selon une quelconque des revendications précédentes, **caractérisé par** un dispositif commutateur à commuter entre un serrage de ladite unité à garniture de frein via ledit premier ou via ledit deuxième dispositif de serrage.

10. Frein à disque selon la revendication 9, **caractérisé en ce que** ledit dispositif commutateur est conçu en tant que dispositif de blocage à bloquer des révolutions dudit dispositif à bielle et manivelle (34, 35, 36).

11. Frein à disque selon une quelconque des revendications précédentes, **caractérisé par** une butée à limiter le mouvement tangentiel, relatif audit disque de frein, de ladite unité à garniture de frein au cas des opérations de serrage du frein au cours de marche arrière, qui est conçu d'une telle façon, que le frein ne soit déplacé essentiellement qu'en sens vertical relatif audit disque de frein au cas des opérations de serrage du frein au cours de marche arrière.

12. Frein à disque selon une quelconque des revendications précédentes, **caractérisé en ce que** ledit moteur électrique (23) tourne ladite manivelle (34) directement ou via au moins un ou plusieurs engrenages (24, 26, 37), cette manivelle comprenant un maneton de vilebrequin (35) servant à mouvoir ladite unité à garniture de frein tangentiellement au disque de frein, c'est-à-dire en parallèle à l'aire de friction du disque de frein.

13. Frein à disque selon une quelconque des revendications précédentes, **caractérisé en ce que** ladite unité à garniture de frein comprend la plaque de serrage (18) portant contre la plaque d'appui de la garniture de frein (19) d'une garniture de frein (20)

14. Frein à disque selon une quelconque des revendications précédentes, **caractérisé en ce que** ledit maneton de vilebrequin (35) s'étend en parallèle à l'axe du disque de frein (BA) et se trouve en prise dans une ouverture à orientation correspondante dans ladite plaque de serrage du frein (18).

15. Procédé à commander un frein à disque à renfort automatique selon une quelconque des revendications précédentes, **caractérisé en ce qu'**au cas des opérations de serrage du frein, en sens de la marche en avant, ledit premier dispositif de serrage de frein est employé, pendant qu'au cas des opérations de serrage du frein en sens de marche arrière, ledit deuxième dispositif de serrage de frein est employé afin de serrer le frein.

16. Procédé selon la revendication 15, **caractérisé en ce qu'**au cas de opérations de serrage du frein en sens de marche en avant, ledit premier dispositif de serrage de frein est employé, pendant qu'au cas de opérations de serrage du frein en sens de marche arrière ledit deuxième dispositif de serrage de frein est employé afin de serrer le frein.

17. Procédé selon une quelconque des revendications précédentes 15 ou 16, **caractérisé en ce qu'**au cas de opérations de serrage du frein en sens de marche en avant, ledit premier dispositif de serrage de frein est employé en combinaison avec ledit moyen de renfort automatique, pendant qu'au cas de opérations de serrage du frein en sens de marche arrière, ledit deuxième dispositif de serrage de frein est employé sans un moyen de renfort automatique afin de serrer le frein.

18. Procédé selon la revendication 15, 16 ou 17, **caractérisé en ce**
**a) qu**'une opération de serrage du frein en marche en avant est réalisée comme suit :
i. ledit moteur électrique est commandé en sens de révolution correspondant au serrage du frein,
il. ladite manivelle est tournée à partir de sa position de contact en sens de révolution du disque de frein pour la commande ladite garniture de frein, auxdites broches étant arrêté de façon, que le moment d'entraînement, qui agit sur ladite manivelle, soit commandée aussi au cours de l'opération de serrage du frein;
iii. ladite garniture de frein est guidée via lesdits corps de roulement le long desdites rampes de renfort, en étant appliqué contre le disque de frein tournante, à l'effort de friction ainsi créée se trouvant en correspondance avec l'inclinaison de rampe, à l'effort de friction ainsi créée portant ladite garniture de frein également en sens de révolution dudit disque de frein et donc aussi la manivelle, en les pressant via lesdites rampes de renfort également contre ledit disque de frein,
iv. l'effort de freinage produit sur les roues décélère le véhicule - si nécessaire jusqu'à l'arrêt,
b) et en ce qu'une opération de serrage du frein in marche arrière est réalisée comme suit :
i. une unité de commande du frein reçoit un signal indiquant le véhicule en état de marche arrière,
ii. le mouvement rotatif de ladite manivelle est bloqué, et
iii. les broches tournent jusqu'au point où l'effort de serrage de frein requis est atteint en vertu du serrage de frein via lesdits pistons de frein.

19. Procédé selon une quelconque des revendications précédentes 15 à 18, **caractérisé en ce qu'**après l'opération de serrage du frein en sens de marche en avant, ledit moteur électrique est commandé en sens de desserrage afin de desserrer le frein, pendant que ladite manivelle est retournée en sa position de contact afin de desserrer ladite garniture de frein.

20. Procédé selon une quelconque des revendications précédentes 15 à 19, **caractérisé en ce qu'**au cas de serrage renforcé en continu, ledit mécanisme de transmission ramifiant détourne le mouvement rotatif d'entraînement, qui agit sur ladite broche, au cas où, en vertu de l'arrêt du disque de frein, l'effet bloquant la rotation, qui agit sur ladite manivelle, est plus grand que l'effort agissant sur lesdites broches, de façon, que le serrage du frein soit continué en vertu de la révolution desdites broches.

21. Procédé selon une quelconque des revendications précédentes 15 à 20, **caractérisé en ce que** le mouvement rotatif de ladite manivelle est bloqué par ledit moyen de blocage, en particulier un frein de retenue magnétique, afin de maintenir l'effet de freinage.

22. Procédé selon une quelconque des revendications précédentes 15 à 21, **caractérisé en ce qu'**au cas, où le chauffeur desserre le frein serré en continu, le moteur électrique est commandé en sens de révolution de desserrage, et qu'ensuite la manivelle est retournée en sa position de contact, après quoi le moteur électrique tourne et retourne lesdites broches ou respectivement lesdits pistons de frein, jusqu'à ce qu'il ait atteint sa position de départ, qui existait avant l'opération de serrage du frein.

23. Procédé selon une quelconque des revendications précédentes 15 à 22, **caractérisé en ce que** la position de freinage en sens de marche arrière est retenu par l'effort de friction desdites broches.

24. Procédé selon la revendication 23, **caractérisé en ce que** directement après le changement du véhicule en marche arrière, ledit moteur électrique est commandé par le système de freinage via l'opération desdites broches afin de réduire le jeu d'aération pour une réduction du délai en réponse du frein dans un cycle de serrage de frein suivant.

25. Procédé selon une quelconque des revendications précédentes 23 ou 24, **caractérisé en ce que,** pour le desserrage de l'effet de freinage en sens de marche arrière, ledit moteur électrique est commandé en sens de desserrage et lesdites broches sont retourné en leur position de marche arrière (jeu d'aération réduit).

26. Procédé selon une quelconque des revendications précédentes 23, 24 ou 25, **caractérisé en ce que** le jeu d'aération est ajusté moyennant lesdites broches au cas d'un changement répété en la direction de marche en avant.

27. Procédé selon une quelconque des revendications précédentes 23 à 26, **caractérisé en ce que** le serrage de frein en sens de marche arrière se réalise en une combinaison avec une commande de la manivelle et de la broche et donc ladite manivelle n'est pas bloquée avant le début du cycle de freinage, à l'opération de freinage étant réalisée par la commande de la manivelle au cas de l'opération du système de freinage, après quoi déroule le changement automatique au serrage moyennant lesdites broches.

28. Procédé selon une quelconque des revendications précédentes 23 à 27, **caractérisé en ce que** l'état de freinage en sens de marche arrière est desserré par un mouvement initial de la manivelle en sa position de contact pour le desserrage du frein et par un mouvement suivant desdites broches en leur position de départ.
